# EUROPÄISCHE PATENTANMELDUNG

(11) **EP 1 564 549 A1**
(43) Veröffentlichungstag der Anmeldung: **17.08.2005**
(21) Anmeldenummer: 05003338.0
(22) Anmeldetag: 16.02.2005
(51) Int. Cl.: G01N 27/416

(54) **Kalibrierung von elektrochemischen Sensoren, insbesondere von pH-Elektroden**

(30) Priorität: 17.02.2004 DE 202004002433 U
(71) Anmelder: Hamilton Bonaduz AG, CH-7402 Bonaduz (CH)
(72) Erfinder: Bühler, Hannes, 8873 Amden (CH)
(74) Vertreter: Dey, Michael, Dipl.-Chem. Dr.

(57) **Zusammenfassung**

Die vorliegende Erfindung betrifft eine vereinfachte Kalibrierung für elektrochemische Sensoren, insbesondere für pH-Elektroden. Die Kalibrationslösung liegt als Hydrogel vor. Die Zusammensetzung des Hydrogels bzw. Puffergel ist so gewählt, dass seine Konsistenz durch das Eintauchen und Herausnehmen der pH-Elektrode nicht signifikant verändert wird. Die Konsistenz des Hydrogels ist weiter so optimiert, dass ein inniger Kontakt mit dem Sensor gewährleistet wird. Die Pufferkapazität des Hydrogels ist höher als bei konventionellen pH-Kalibrationslösungen bzw. pH-Pufferlösungen, was ein mehrmaliges Kalibrieren im selben Hydrogel erlaubt.

Die Erfindung betrifft außerdem die Aufbewahrung von pH-Elektroden. Die sogenannte Wässerungskappe wird mit dem Aufbewahrungsgel gefüllt. Dies erlaubt eine Kontrolle der pH-Elektrode ohne zusätzliche pH-Pufferlösungen. Im weiteren verhindert das Puffergel das lästige "Kriechen" der üblich verwendeten KCl-Lösung aus der Wässerungskappe, was zur Verschmutzung des Sensors, des Kabels und insbesondere des Steckers führt.

## Beschreibung

Die vorliegende Erfindung betrifft Aufbewahrungs- oder/und Kalibrationslösungen für chemische Sensoren, wie zum Beispiel pH-Elektroden.

pH-Elektroden müssen periodisch kalibriert werden, da sich Nullpunkt und Steilheit mit der Zeit verändern. Dazu dienen Standardlösungen mit einem definierten pH-Wert. Diese Kalibrationslösungen werden allgemein als pH-Pufferlösungen bezeichnet. Die pH-Werte dieser pH-Pufferlösungen liegen innerhalb des Messbereiches von pH 0 bis pH 14. Im Allgemeinen werden 2 Pufferlösungen mit unterschiedlichem pH eingesetzt, z.B. pH 4 und pH 7, um eine Kontrolle von Nullpunkt und Steilheit vorzunehmen. Bei der Einpunkt Kalibrierung wird lediglich der Nullpunkt der Elektrode überprüft. Es empfiehlt sich, den Bereich des Messwertes mit den pH-Pufferlösungen zu umfassen.

Da >90 % der Messlösungen einen pH Wert zwischen 4 und 10 aufweisen sind die 3 pH-Pufferlösungen pH 4, 7 und 10 weit verbreitet und genügen zur Kontrolle der pH-Sensoren. Die chemischen Zusammensetzungen dieser pH-Pufferlösungen sind bekannt und in Lehrbüchern wie auch in etlichen Normen beschrieben, z.B. in IEC 746 oder DIN 19266

Je nach Genauigkeitsanforderung der Messung wird stündlich, täglich oder wöchentlich kalibriert. Bei der Kalibrierung wird normalerweise eine geringe Menge Puffer, z.B. 50 ml in ein Gefäß gegeben. Die Elektrode wird mit Wasser gespült und in die pH-Pufferlösung eingetaucht. Nach der Stabilisierung des Wertes wird der Sensor wiederum gespült und in die zweite pH-Pufferlösung eingetaucht. Nach der Speicherung der Werte ist die Elektrode bereit für die pH-Messung der Probe.

Nachteilig bei der Verwendung von Pufferlösungen zur Kalibration ist das mögliche Verschütten der pH-Pufferlösungen. Die Elektrode mit angeschlossenem Kabel zeigt eine beträchtliche Hebelwirkung, was zum häufigen Umkippen des Gefässes führt. Dieses Problem kann mit einem großen Gefäß und viel pH-Pufferlösung gelöst werden, was aber teuer und umständlich ist. Eine Alternative sind Stative mit befestigtem Kalibriergefäß. Bei der Feldmessung ist diese Methode aber nicht anwendbar.

Neben Kalibrationslösungen werden für pH-Elektroden auch Aufbewahrungslösungen verwendet. Bei Nichtgebrauch müssen pH-Elektroden nass gelagert werden. In den meisten Fällen dient dazu eine 3 molare KCI Lösung. Diese Salzlösung weist die unangenehme Eigenschaft auf, dass sie durch kleinste Öffnungen herauskriecht (vgl. Buch von H. Glaster: "pH-Messung", VCH 1990, Seite 80). Dies führt zu Korrosion am Elektodenstecker oder generell an Metallteilen. Bis heute konnte dieses Problem nicht zufriedenstellend gelöst werden.

Einige der Nachteile der Elektrodenaufbewahrung und des üblich verwendeten Kalibrationsverfahrens mit pH-Pufferlösungen können mit pH-Pufferlösungen und Aufbewahrungslösungen in Form von Hydrogelen eliminiert werden. Hydrogele sind wässrige oder teilwässrige Gebilde, deren geometrische Form durch ein 3-dimensionales hydrophiles Gerüst aus Polymerketten fixiert ist. Bekannte Beispiele für Hydrogele sind Marmeladen z.B. Quittengelee. Für die Gelierung von Lösungen werden Gelatine, Pektine, Alginate, Agar, modifizierte Cellulosen und viele synthetischen hydrophile Polymere eingesetzt.

Das US Patent 5,248,403 beschreibt solche Hydrogele, welche für die Aufbewahrung und Kalibrierung von planaren pH-Elektroden entwickelt wurden. Die mechanischen Anforderungen an diese planaren Aufbewahrungs- und Puffergele sind gering, da sie lediglich auf die planare Elektrode gedrückt werden müssen. Die planaren pH-Elektroden haben sich aus fabrikationstechnischen Gründen nicht durchgesetzt.

Bei der Kalibrierung der konventionellen pH-Elektroden mit einer kegel- oder kuppenförmigen Elektrodenspitze sind die planaren Hydrogele unbrauchbar. Es ist notwendig, dass die konventionelle Elektrode in das Puffergel eingeführt und nach dem Erreichen eines stabilen Messwertes wieder entfernt wird. Es zeigte sich, dass die meisten Hydrogele zur Kalibration oder Aufbewahrung von konventionellen Elektroden unbrauchbar sind, da die Struktur der Hydrogele durch das Einführen der Elektrode zerstört wird. Nach dem Entfernen des Sensors wiesen die Hydrogele Risse oder sogar Hohlräume auf. Bei einer erneuten Kalibrierung ist daher der vollständige Kontakt zwischen Sensor und Hydrogel nicht mehr gewährleistet. Parallel dazu verschlechtert sich die Genauigkeit der Kalibrierung.

Bei einigen Gelformulierungen haftet das Gel zu stark an der Elektrode, sodass bei der Entfernung der Elektrode Teile des Hydrogels herausgerissen werden.

Eine Aufgabe der vorliegenden Erfindung war es deshalb, eine Aufbewahrungslösung bzw. Kalibrierungslösung für chemische Sensoren, insbesondere für Elektroden bereitzustellen, welche die Nachteile des Standes der Technik nicht aufweist.

Diese Aufgabe wurde gelöst durch wässrige oder teilwässrige Lösungen zur Aufbewahrung oder/und Kalibrierung von chemischen Sensoren, insbesondere elektrochemischen Sensoren, in Form eines Hydrogels, welche dadurch gekennzeichnet sind, dass das Einführen oder/und Herausnehmen des Sensors in das bzw. aus dem Hydrogel zu keiner sichtbaren Beschädigung des Gels führt. Die erfindungsgemäßen Hydrogele sind formstabil, und erfüllen die mechanischen Anforderungen, die durch das Einführen und Herausnehmen von Sensoren, insbesondere von Elektroden an das Gel gestellt werden. Insbesondere ist es möglich, in die erfindungsgemäßen Gele einen Sensor, beispielsweise eine Elektrode einzuführen, ohne dass die Struktur des Hydrogels zerstört oder beschädigt wird. Dadurch ist ein vollständiger Kontakt zwischen Sensor und Hydrogel gewährleistet. Nach dem Entfernen des Sensors weisen die erfindungsgemäßen Hydrogele wieder eine zusammenhängende Struktur ohne Risse oder gar Hohlräume auf. Dadurch können die erfindungsgemäßen Hydrogele auch mehrfach für die Kalibrierung bzw. für die Aufbewahrung von Sensoren eingesetzt werden, ohne dass sich die Genauigkeit oder Qualität der Kalibrierung bzw. Aufbewahrung verschlechtern würde.

Das erfindungsgemäße Hydrogel basiert vorteilhaft auf Acrylamid, substituierten Acrylamiden, Methacrylamid, substituierten Methacrylamiden, Acrylsäuren, substituierte Acrylsäuren, Methacrylsäuren, substituierte Methacrylsäure, Acrylaten, substituierten Acrylaten, Methacrylaten, substituierten Methacrylaten wie z.B. Hydroxyalkylmethacrylaten, Polyvinylalkoholen, Polyvinylpyrrolidonen, Siloxanen, Gummi Arabicum, Pektinen, Polysacchariden, Dextran oder/und Cellulosederivaten. Besonders vorteilhafte Gele können auf Basis von Acrylamid, Methacrylamid, substituierten Acrylamiden, Acrylsäuren, Methacrylsäuren und Hydroxyalkylmethacrylaten erhalten werden. Geeignete Substituenten sind z.B. Hydroxy-, Amin-, C₁-C₄-Kohlenwasserstoffe, welche geradkettig oder verzweigt sein können, C₁-C₄-Alkoxy oder NR'R", wobei R', R" jeweils unabhängig einen C₁-C₄-Kohlenwasserstoffrest darstellen. Geeignete Monomere zur Herstellung solcher Hydrogele sind beispielsweise Acrylamid, Methacrylamid, Acrylsäure, Methacrylsäure, Hydroxyalkylmethacrylat sowie N-substituierte Acrylamide, insbesondere N,N-Dimethylacrylamid (DMA), N-Hydroxymethylacrylamid, N-Hydroxyethylacrylamid, N-Glycerinacrylamid, N-(2-Hydroxy-1,1-bis-hydroxymethyl-ethyl)-2-methylacrylamid (auch Trisacrylamid oder N-(Tris(hydroxymethyl)-N-methylacrylamid genannt) oder N-Diethylacrylamid (DEA). Diese Monomere können alleine oder in Kombination zur Herstellung der erfindungsgemäßen Hydrogele verwendet werden, wobei der Einsatz von Trisacrylamid sowie von DEA alleine weniger bevorzugt ist.

Weiterhin bevorzugt sind Methacrylatester und insbesondere Methacrylate gebildet aus Alkoholen, die mindestens zwei Hydroxygruppen oder/und Aminogruppen enthalten, sodass die resultierenden Methacrylatester mindetens eine freie Hydroxygruppen, Amingruppe (NR'R") oder/und Akoxygruppe (bevorzugt C₁-C₄-Alkoxy) aufweisen. Beispiele für solche Methacrylatester sind 2-Hydroxymethylmethacrylat, 2-Hydroxyethylmethacrylat (HEMA), 2,3-Dihydroxypropylmethacrylat, Glycerinmethacrylat, 3-Amino-2-hydroxy-propylmethacrylat, 2-Amino-3-hydroxy-propylmethacrylat, 2-Amino-3-hydroxy-propylmethacrylat, 3-Diethylamino-2-hydroxy-propylmethacrylat, 3-Ethoxy-2-hydroxy-propylmethacrylat, 3-Methoxy-2-hydroxy-propylmethacrylat, 3-Methyl-amino-2-hydroxy-propylmethacrylat und Kombinationen davon.

Um die Sprödigkeit des Hydrogels zu verringern, können dem Hydrogel weitere Substanzen, beispielsweise amorphe Kieselsäure zugesetzt werden. Vorzugsweise werden 0,1 bis 10 Gew.-% amorphe Kieselsäure, bezogen auf das Gesamtgewicht der festen Bestandteile des Hydrogels zugesetzt. Besonders bevorzugt wird eine Kieselsäure verwendet, die eine Oberfläche von 50 bis 500 m²/g aufweist.

Besonders bevorzugt besteht das Hydrogel aus vernetztem Acrylamid oder vernetzten substituierten Acrylamiden, insbesondere vernetzten N-substituierten Acrylamiden. Geeignete Vernetzer sind beispielsweise N,N'-Methylen-bis-acrylamid, 1,2-Dihydroxyethylen-bis-acrylamid, Ethylenglykoldimethyacrylat, Diethylenglykol-dimethacrylat, Tetraethylenglykoldimethacrylat, Polyethylenglykol-dimethacrylat und ähnliche Dimethacrylate. Der Anteil des Vernetzers am Anteil des zu vernetzenden Monomers beträgt vorteilhafterweise 1 bis 10 Gew.-%, mehr bevorzugt 2 bis 8 Gew.-%. Der Anteil an festen Substanzen, welche die Basis für das Hydrogel bilden in den Hydrogelen wiederum beträgt vorteilhafterweise 2 bis 10 Gew.-%, insbesondere 3 bis 8 Gew.-%.

Durch die Abstimmung von Gehalt an Monomeren und Konzentration an Vernetzer könnten formstabile Hydrogele erhalten werden. Die Umsetzung zwischen Hydrogelbasismonomer und Vernetzer wird vorteilhafterweise durch Radikalstarter gestartet, wie etwa durch N,N'-Tetramethylethylendiamin (TEMED) und Ammoniumpersulfat.

Bei den erfindungsgemäßen Hydrogelen handelt es sich um wässrige oder teilwässrige Lösungen. Wässrige Lösungen weisen einen Wassergehalt von größer 90 bis 98 Gew.-%, insbesondere von 94 bis 96 Gew.-% auf. Teilwässrige Lösungen haben einen Wasseranteil von 10 bis 90 Gew.-%, insbesondere von 30 bis 50 Gew.-%.

In einer besonders bevorzugten Ausführungsform enthält das erfindungsgemäße Hydrogel weiterhin ein Feuchthaltemittel, insbesondere ein hygroskopisches Feuchthaltemittel. Geeignete Feuchthaltemittel sind beispielsweise Glycerin, Ethylenglykol oder Propylenglykol. Solche Feuchthaltemittel verhindern ein vollständiges Austrocknen des Gels, da Wasser nur solange verdunstet, bis der Partialdruck von Wasser im Puffergel und in der Luft gleich groß ist. Der Gehalt an Feuchthaltemittel im Hydrogel beträgt vorteilhafterweise 10 bis 80 Vol.-%, mehr bevorzugt 40 bis 60 Vol.-%, bezogen auf das Gesamtvolumen des Hydrogels.

Das erfindungsgemäße Hydrogel enthält vorzugsweise weiterhin mindestens ein Salz, insbesondere KCl.

Das erfindungsgemäße Hydrogel dient bevorzugt zur Aufbewahrung von Sensoren, insbesondere chemischen Sensoren, wie etwa elektrochemischen Sensoren. Beispiele für solche Sensoren sind Elektroden und insbesondere pH-Elektroden. Weiterhin kann das erfindungsgemäße Hydrogel auch zur Kontrolle bzw. Kalibrierung der Sensoren herangezogen werden. Dazu wird beispielsweise eine Wässerungskappe mit erfindungsgemäßem Hydrogel gefüllt, bereitgestellt. Zur Kalibrierung bzw. Kontrolle enthält das Hydrogel in dieser bevorzugten Ausführungsform weitere Bestandteile, die einen definierten Messwert für den jeweiligen Sensor liefern. Im Fall von pH-Elektroden enthält das Hydrogel vorteilhafterweise pH-Pufferlösungen, insbesondere Pufferlösungen mit einem pH-Wert zwischen 2 und 12. Die Pufferkapazität der eingesetzten Pufferlösungen ist vorteilhafterweise größer als 0,05 Mol/l · pH, insbesondere ≥ 0,10 Mol/l · pH. Geeignete Puffersysteme sind beispielsweise ein Hydrogenphosphat/Dihydrogenphosphatpuffer mit einem pH-Wert von 7, ein Zitronensäuremonohydratpuffer mit einem pH-Wert von 4, ein Carbonat/Hydrogencarbonatpuffer mit einem pH-Wert von 10 oder ein Boratpuffer mit einem pH-Wert von 9.

Im Fall der Verwendung als Aufbewahrungsgel, aber auch als Zusatz zu Kalibirierungsgelen enthält das erfindungsgemäße Hydrogel vorteilhafterweise Kaliumchlorid, insbesondere eine 3 M KCl-Lösung.

Die erfindungsgemäßen Gele sind hervorragend sowohl für die Aufbewahrung als auch für die Kalibirierung von chemischen Sensoren geeignet.

Überraschend gelang es mit den erfindungsgemäßen Gelen, insbesondere mit vernetzten Polyacrylamid Hydrogelen, die im Stand der Technik beschriebenen Probleme zu beheben.

Die oben beschriebenen Hydrogele werden bevorzugt als Kalibriergele oder/und als Aufbewahrungsgele für chemische Sensoren eingesetzt. Bei den chemischen Sensoren handelt es sich dabei bevorzugt um elektrochemische Sensoren und insbesondere um pH-Elektroden. Das erfindungsgemäße Hydrogel ist dabei zur Verwendung als Kalibriergel oder als Aufbewahrungsgel auch von konventionellen chemischen Sensoren geeignet und nicht nur von planaren pH-Elektroden. Besonders bevorzugt handelt es sich deshalb bei den eingesetzten chemischen Sensoren nicht um Sensoren mit planarer Struktur, sondern um konventionelle Sensoren, insbesondere um konventionelle pH-Elektroden, welche insbesondere eine zylindrische Form aufweisen. Mit dem erfindungsgemäßen Hydrogel können insbesondere auch Sensoren kalibriert oder aufbewahrt werden, die eine Rotationssymmetrie aufweisen.

Für den Fall der Verwendung als Kalibriergel enthält das Hydrogel vorteilhafterweise ein pH-Puffersystem mit einem vorbestimmten, festgelegten pH-Wert beziehungsweise ein sonstiges System, welches einen zur Kalibrierung benötigten vorbestimmten Wert aufweist.

Bei Verwendung als Aufbewahrungsgel enthält das Hydrogel vorteilhafterweise ein Salz, insbesondere KCl.

Erfindungsgemäß kann der chemische Sensor vollständig in das Hydrogel eingebracht werden, sodass ≥ 50 %, insbesondere ≥ 70 %, und mehr bevorzugt ≥ 80 % der Oberfläche des Sensors mit dem Hydrogel in Kontakt stehen. Obwohl das Hydrogel den Sensor umschließt, entsteht beim Einführen oder Herausnehmen keine Beschädigung am Gel.

Die vorliegende Erfindung betrifft eine vereinfachte Kalibrierung für elektrochemische Sensoren, insbesondere für pH-Elektroden. Die Kalibrationslösung liegt als Hydrogel vor. Die Zusammensetzung des Hydrogels bzw. Puffergel ist so gewählt, dass seine Konsistenz durch das Eintauchen und Herausnehmen der pH-Elektrode nicht signifikant verändert wird. Die Konsistenz des Hydrogels ist weiter so optimiert, dass ein inniger Kontakt mit dem Sensor gewährleistet wird. Die Pufferkapazität des Hydrogels ist höher als bei konventionellen pH-Kalibrationslösungen bzw. pH-Pufferlösungen, was ein mehrmaliges Kalibrieren im selben Hydrogel erlaubt.

Die Erfindung betrifft außerdem die Aufbewahrung von pH-Elektroden. Die sogenannte Wässerungskappe wird mit dem Aufbewahrungsgel gefüllt. Dies erlaubt eine Kontrolle der pH-Elektrode ohne zusätzliche pH-Pufferlösungen. Im weiteren verhindert das Puffergel das lästige "Kriechen" der üblich verwendeten KCI-Lösung aus der Wässerungskappe, was zur Verschmutzung des Sensors, des Kabels und insbesondere des Steckers führt.

Weitere Merkmale, Anwendungsmöglichkeiten und Vorteile der Erfindung ergeben sich aus der nachfolgenden Beschreibung von Ausführungsbeispielen. Dabei bilden alle beschriebenen Merkmale für sich oder in beliebiger Kombination den Gegenstand der Erfindung.

### Beispiele

### Ausführungsbeispiel 1: Puffergel pH 7

In ca. 600 ml Wasser wurden gelöst 27.8 g Na₂HPO₄ . 2 H₂O, 11.6 g KH₂PO₄, 35 g Acrylamid und 1.05 g Bisacrylamid. Nach der Zugabe von 300 ml Glycerin füllte man mit Wasser auf 1 Liter auf. Die Polymerisation bei Raumtemperatur wurde mit TEMED (N,N,N',N'-Tetramethylethylendiamin) und Ammoniumpersulfat gestartet. Innerhalb von 1 Stunde entstand das Puffergel pH 7. Die Pufferkapazität betrug 0.11.

Dieses Puffergel enthält zusätzlich 30 % Glycerin als hygroskopisches Feuchthaltemittel. Ein vollständiges Austrocknen des Gels ist daher nicht möglich. Wasser verdunstet nur so lange, bis der Partialdruck von Wasser im Puffergel und in der Luft gleich groß ist.

### Ausführungsbeispiel 2: Puffergel pH 4

In ca. 400 ml Wasser wurden gelöst 21 g Zitronensäure Monohydrat, 110 g KCl, 35 g Acrylamid und 1.05 g Bisacrylamid. Nach der Zugabe von 300 ml Glycerin und 140 ml 1 M NaOH füllte man mit Wasser auf 1 Liter auf. Die Polymerisation bei Raumtemperatur wurde mit TEMED (N,N,N',N'-Tetramethylethylendiamin) und Ammoniumpersulfat gestartet. Innerhalb von 1 Stunde entstand das Puffergel pH 4. Die Pufferkapazität betrug 0.09.

Dieses Puffergel pH 4 enthält 1.5 M KCI und kann daher auch als Aufbewahrungsgel für pH-Elektroden benutzt werden. Es ist auch denkbar, dass bereits in der Fabrikation die Wässerungskappen mit diesem Gel gefüllt werden. Dies erlaubt eine Funktionskontrolle der pH-Elektrode in der Wässerungskappe selbst, ohne die Verwendung weiterer Kalibrationslösungen.

### Ausführungsbeispiel 3: Puffergel pH 10

In ca. 600 ml Wasser wurden gelöst 21.0 g Na₂CO₃, 7.5 g NaHCO₃, 35 g Acrylamid und 1.05 g Bisacrylamid. Nach der Zugabe von 300 ml Glycerin füllte man mit Wasser auf 1 Liter auf. Die Polymerisation bei Raumtemperatur wurde mit TEMED (N,N,N',N'-Tetramethylethylendiamin) und Ammoniumpersulfat gestartet. Innerhalb von 1 Stunde entstand das Puffergel pH 10. Die Pufferkapazität betrug 0.15.

### Ausführungsbeispiel 4: Puffergel pH 9

In 1000 ml 3M KCl Lösung wurden 19 g Na₂B₄O₇.10 H₂O, 50 g Acrylamid, 2.0 g Bisacrylamid gelöst. Die Polymerisation bei Raumtemperatur wurde mit TEMED (N,N,N',N'-Tetramethylethylendiamin) und Ammoniumpersulfat gestartet. Innerhalb von 1 Stunde entstand das Puffergel pH 9.

Dieses rein wässrige Puffergel enthält viel Kaliumchlorid und kann auch als Aufbewahrungsgel und Kalibrationsgel verwendet werden.

### Ausführungsbeispiel 5: Aufbewahrungsgel

In 1000 ml 3M KCI Lösung wurden 30 g Acrylamid, 1.0 g Bisacrylamid und 0.2 g Natriumacid gelöst. Die Polymerisation bei Raumtemperatur wurde mit TEMED (N,N,N',N'-Tetramethylethylendiamin) und Ammoniumpersulfat gestartet. Innerhalb von 1 Stunde entstand das Aufbewahrungsgel.

Dieses rein wässrige Aufbewahrungsgel ohne Puffersubstanzen kann anstelle der 3M KCl Lösung in den Wässerungskappen verwendet werden.

### Ausführungsbeispiel 6: Aufbewahrungsgel

In 500 ml 3M KCI Lösung wurden 500 ml Glycerin, 40 g Acrylamid, 1.2 g Bisacrylamid und 0.2 g Natriumacid gelöst. Die Polymerisation bei Raumtemperatur wurde mit TEMED (N,N,N',N'-Tetramethylethylendiamin) und Ammoniumpersulfat gestartet. Innerhalb von 1 Stunde entstand das Aufbewahrungsgel.

Dieses teilwässrige Aufbewahrungsgel ohne Puffersubstanzen kann anstelle der 3M KCI Lösung in den Wässerungskappen verwendet werden. Der Zusatz von Glycerin verhindert das Austrocknen des Gels.

### Ausführungsbeispiel 7:

Kalibration der Hamilton pH Elektrode P/N 238400 mit den Puffergelen pH 3, 7 und pH 7 gemäss Ausführungsbeispiel 1 und 2. Test bei Raumtemperatur von 22 °C.

*Versuch A:* Die Elektrode wurde stets gespült mit lonentauscherwasser vor dem Eintauchen in das nächste Puffergel. Die Messung pH 7 → pH 3,7 wurde 4 mal wiederholt.

| | |
|---|---|
| pH 6.98 | pH 3.69 |
| pH 7.02 | pH 3.69 |
| pH 7.03 | pH 3.69 |
| pH 7.03 | pH 3.69 |
| pH 7.03 | pH 3.69 |

Die Werte wurden nach 30 - 60 s abgelesen. Die Reproduzierbarkeit der Messungen ist gut.

*Versuch B:* Die Elektrode wurde nur mit einem Papiertuch gereinigt vor dem Eintauchen in das nächste Puffergel. Die Messung pH 7 → pH 3,7 wurde 4 mal wiederholt.

| | |
|---|---|
| pH 7.01 | pH 3.68 |
| pH 7.02 | pH 3.68 |
| pH 7.01 | pH 3.66 |
| pH 7.00 | pH 3.66 |
| pH 7.01 | pH 3.67 |

Die Werte wurden nach 30 - 60 s abgelesen. Die Reproduzierbarkeit der Messungen ist gut.

## Patentansprüche

1. Wässrige oder teilwässrige Lösung zur Aufbewahrung oder/und Kalibration von chemischen Sensoren in Form eines Hydrogels,
**dadurch gekennzeichnet,**
**dass** das Einführen und Herausnehmen des Sensors in das Hydrogel zu keiner sichtbaren Beschädigung des Gels führt.

2. Hydrogel nach Anspruch 1,
**dadurch gekennzeichnet,**
**dass** es zur Aufbewahrung oder/und zur Kalibration von pH-Elektroden eingesetzt wird.

3. Hydrogel nach Anspruch 1,
**dadurch gekennzeichnet,**
**dass** es auf Acrylamid, substituierten Acrylamiden, Methacrylamid, substituierten Methacrylamiden, Acrylsäuren, substituierten Acrylsäuren, Methacrylsäuren, substituierten Methacrylsäuren, Acrylaten, substituierte Acrylaten, Methacrylaten, substituierte Methacrylaten wie z.B. Hydroxyalkylmethacrylaten, Polyvinylalkoholen, Polyvinylpyrrolidonen, Siloxanen, Gummi arabicum, Pektinen, Polysacchariden, Dextran und vernetzten hydroxilierten Cellulosederivaten basiert.

4. Hydrogel nach Anspruch 3,
**dadurch gekennzeichnet,**
**dass** das Hydrogel auf vernetztem Polyacrylamid basiert.

5. Hydrogel nach Anspruch 4,
**dadurch gekennzeichnet,**
**dass** das Hydrogel 2-10 Gew.-% Acrylamid enthält.

6. Hydrogel nach Anspruch 4,
**dadurch gekennzeichnet,**
**dass** das Hydrogel 1-10 % des Vernetzers N,N'-Methylenbisacrylamid enthält, bezogen auf das Gewicht von Acrylamid.

7. Hydrogel nach Anspruch 2,
**dadurch gekennzeichnet,**
**dass** pH-Pufferlösungen mit pH-Werten zwischen 2 und 12 als Basis dienen.

8. Hydrogel nach Anspruch 7,
**dadurch gekennzeichnet,**
**dass** die Pufferkapazität grösser ist als 0.05 Mol/(I.pH).

9. Hydrogel nach Anspruch 1,
**dadurch gekennzeichnet,**
**dass** das Hydrogel teilwässrig ist.

10. Hydrogel nach einem der vorhergehenden Ansprüche,
**dadurch gekennzeichnet,**
**dass** das Hydrogel ein Feuchthaltemittel, insbesondere Glycerin, Ethylenglykol oder Propylenglykol enthält.

11. Hydrogel nach Anspruch 10,
**dadurch gekennzeichnet,**
**dass** der Gehalt an Glycerin oder/und Ethylenglykol 10-80 % beträgt, bezogen auf das Gesamtvolumen.

12. Hydrogel nach einem der vorhergehenden Ansprüche,
**dadurch gekennzeichnet,**
**dass** das Hydrogel für die Aufbewahrung von pH-Elektroden dient.

13. Hydrogel nach Anspruch 12,
**dadurch gekennzeichnet,**
**dass** eine Kontrolle der pH-Elektrode im Aufbewahrungsgefäß erfolgt.

14. Hydrogel nach einem der vorhergehenden Ansprüche,
**dadurch gekennzeichnet,**
**dass** es ein Salz, insbesondere KCI enthält.

15. Verwendung eines Hydrogels nach einem der Ansprüche 1-14 als Kalibriergel zur Kalibrierung von chemischen Sensoren.

16. Verwendung nach Anspruch 15 zur Kalibrierung von elektrochemischen Sensoren, insbesondere von pH-Elektroden.

17. Verwendung eines Hydrogels nach einem der Ansprüche 1-14 als Aufbewahrungsgel zur Aufbewahrung von chemischen Sensoren.
